# EUROPÄISCHE PATENTSCHRIFT

(11) **EP 1 193 012 B1**
(45) Veröffentlichungstag und Bekanntmachung des Hinweises auf die Patenterteilung: **04.05.2005**
(21) Anmeldenummer: 01122732.9
(22) Anmeldetag: 21.09.2001
(51) Int. Cl.: B23B 31/40, B23C 5/26

(54) **Spannvorrichtung mit Spannschraube**
Clamping mechanism with clamping screw
Dispositif de serrage avec vis de serrage

(30) Priorität: 02.10.2000 DE 20017070 U
(43) Veröffentlichungstag der Anmeldung: 03.04.2002
(73) Patentinhaber: Reinauer Rita, 72488 Sigmaringen (DE)
(72) Erfinder: Reinauer, Josef, 72488 Sigmaringen (DE)
(74) Vertreter: Riebling, Peter, Dr.-Ing.

(56) Entgegenhaltungen:
- DE-U- 29 908 418
- US-A- 3 766 812

## Beschreibung

Die Erfindung betrifft eine Spannvorrichtung mit Spannschraube nach dem Oberbegriff des Patentanspruches 1.

Ein derartige Spannvorrichtung mit Spannschraube ist beispielsweise mit dem Gegenstand der DE-295 18 660 U1 bekannt geworden. Die dort gezeigte Spannvorrichtung beinhaltet eine Spannscheibe und eine mit dieser zusammenwirkende Spannschraube, die ausgehend von einem Gewindebereich im Bereich ihres Zapfenteils bis hin zum Kopfteil spreizbar ausgebildet ist. Im Kopfteil selbst ist eine Spreizvorrichtung angeordnet, welche die geschlitzte Spannschraube spreizen soll.

Eine derartige Spannvorrichtung hat sich bewährt, hat jedoch den Nachteil, dass die Spannschraube relativ aufwendig herzustellen ist und dass die Schlitzung den Schraubenschaftquerschnitt schwächt.

Es werden im übrigen Biegespannungen auf den Schraubenschaftquerschnitt übertragen, die bei hoher Spreizung der Schraube zu einer Beschädigung im Schraubenschaftquerschnitt führen.

Im übrigen ist für diese bekannte Spannschraube auch eine gewisse Mindestlänge des Zapfens erforderlich, um überhaupt die Spreizwirkung zu erreichen.

Nachdem der Spreizantrieb für die Spreizschraube lediglich an einer Spreizseite angeordnet ist, besteht der Nachteil, dass ein unsymmetrischer Antrieb vorhanden ist, der bei schnellen Umdrehungszahlen zu einer Unwucht der gesamten Anordnung führt.

Es gibt im Übrigen auch keine vollständige Berührung der Kegelmantelflächen des Spreizquerschnittes der Spannschraube mit den dazugehörenden Flächen der Spannscheibe. Es ist also keine optimale Kraftübertragung von den Spannquerschnitten der Spannschraube auf die zugehörenden Anlageflächen in der Spannscheibe gegeben.

Die US 3,766,812 zeigt bereits eine Spannvorrichtung zum Spannen eines Werkstücks in axialer Richtung, wobei die Spreizvorrichtung der Spannvorrichtung lediglich im Spannkopf vorgesehen ist und zwei radial gegeneinander verstellbare Spannbackenhälften aufweist.

Nachteil hierbei ist jedoch, dass die zwei radial gegeneinander verstellbaren Spannbackenhälften sich lediglich mit ihren nach innen gerichteten Stirnflächen an der entsprechenden Anlagefläche am Boden der Ausnehmung des Werkstückes anlegen, nachdem die Spannbacken radial verspreizt wurden, so dass eine exakte Zentrierung des Werkstücks zur Spannvorrichtung nicht erfolgt. Daher kann keine exakte Einspannung des Werkstückes erfolgen, was zu Ungenauigkeiten bei der Bearbeitung des Werkstückes führt, insbesondere bei mehreren Bearbeitungsschritten, bei denen ein Umspannen des Werkstückes nötig ist.

Der Erfindung liegt deshalb die Aufgabe zugrunde, eine Spannvorrichtung der eingangs genannten Art so weiter zu bilden, dass die Spannschraube wesentlich kostengünstiger und höher lastübertragend ausgebildet sein kann, und dass eine bessere Kraftübertragung von der Spannschraube auf die dazugehörende Spannscheibe gegeben ist.

Zur Lösung der gestellten Aufgabe ist die Erfindung dadurch gekennzeichnet, dass der Schraubenschaft der Zugstange eine Durchgangsbohrung der zwei Spannbacken-Hälften durchgreift.

Die Spreizvorrichtung der Spannschraube ist dabei lediglich im Spannkopf angeordnet.

Mit der gegebenen technischen Lehre ergibt sich der wesentliche Vorteil, dass nun auf eine Schlitzung des Schaftes (Zapfenteils) der Spannschraube verzichtet werden kann, und die Spreizvorrichtung mit zugehörigen Spannbacken lediglich im Kopfteil selbst angeordnet ist. Die vorher beschriebene Spreizung des Zapfenteils der Spannschraube entfällt damit vollständig.

Damit ergibt sich ein wesentlich einfacherer Aufbau der gesamten Spannschraube, denn es werden lediglich zwei gegeneinander gerichtete Spannbacken vorgeschlagen, die im Bereich des Spannkopfes gegeneinander verschiebbar sind, wobei die gegenseitige Verschiebung der Spannbacken etwa axial zur Spannschraube durch eine entsprechende Antriebsvorrichtung erfolgt.

Für die Ausbildung der Antriebsvorrichtung zur Verschiebung der Spannbacken werden mehrere unterschiedliche Ausführungsbeispiele vorgeschlagen.

Mit dieser technischen Lehre ergibt sich der Vorteil, dass eine Schlitzung und damit Schwächung des Schraubenschaftquerschnittes nicht mehr gegeben ist. Es werden demzufolge auch keine Biegespannungen mehr auf das Zapfenteil übertragen.

Dies führt zu dem Vorteil, dass das Zapfenteil auch keine Mindestlänge mehr benötigt, denn die Spreizung erfolgt nur noch im Spannkopf der Spannschraube und nicht mehr im Zapfenteil der Spannschraube.

Damit besteht der Vorteil, dass der Schraubenschaft der Spannschraube eine beliebige Länge aufweisen kann, d. h. er kann je nach den Erfordernissen lang oder kurz ausgebildet werden, und er kann an seinem Fußende auch ein beliebiges Gewindeteil aufweisen, welches entweder ein Links- oder Rechtsgewinde ausbildet.

In einer bevorzugten Ausgestaltung der Erfindung ist es im übrigen vorgesehen, dass der Spreizantrieb der Spreizvorrichtung der beiden Spannbacken synchron arbeitet, so dass also die Spannbacken genau symmetrisch verschoben werden, was den Vorteil besitzt, dass ein derartiger Spannkopf auch mit hohen Umdrehungszahlen ohne Unwucht rotieren kann.

Weiter wird der Vorteil erreicht, dass die Spannbacken der Spreizvorrichtung genau gleichmäßig spannen und ihre Spannkräfte auf die dazugehörenden Anlageflächen der Spannscheibe gleichmäßig übertragen.

Es kommt im übrigen nicht mehr zu einer geneigten Verschiebung von Spannflächen - wie beim Stand der Technik gegeben war - sondern nach der Erfindung werden die Spannbacken genau senkrecht zur Längsachse des Spannelementes verschoben.

Damit wird eine bessere, flächige Anlage der Spannbacken im Kegel der Spannscheibe erreicht, weil ein Kippen der Spannbacken nicht mehr gegeben ist, wie sie beim Stand der Technik hingenommen werden musste.

Im Übrigen wird es bevorzugt, wenn für den Spreizantrieb eine Betätigungsschraube verwendet wird, die von beiden Seiten her betätigbar ist, so dass also eine schnelle beidseitige Betätigung der Spannvorrichtung gegeben ist.

Die genannten Teile sind auch sehr einfach herzustellen, weil lediglich ein Schraubenschaft hergestellt werden muss, der aus einem Gewindeteil, einem sich daran anschließenden Zapfenteil und aus einem sich daran anschließenden Kopfteil besteht, was besonders günstig in der Herstellung ist.

Die dazugehörenden beiden Spannbacken-Hälften können als einfaches Drehteil hergestellt werden, und werden nach der Fertigstellung lediglich durch einen Trennschnitt voneinander getrennt.

Hieraus ergibt sich auch eine einfache Montage der genannten Teile.

In einer weiteren Ausführungsform ist im Vergleich zu dem erstbeschriebenen Ausführungsbeispiel vorgesehen, dass nicht maschinenseitig eine Zugstange als Halteelement verwendet wird, sondern dass die gesamte Spannvorrichtung als Spannmutter ausgebildet ist, bei der in einer Durchgangsbohrung der Spannscheibe eine Gewindebüchse angeordnet ist, die in Eingriff mit einem Maschinen-Zapfen ist und die ferner am Außenumfang den Spannring mit den beiden radial spreizbaren Spannbacken trägt.

Im Gegensatz zum erstgenannten Ausführungsbeispiel, bei dem maschinenseitig eine Gewindebohrung vorgesehen ist, ist nun in dem letztbeschriebenen Ausführungsbeispiel ein maschinenseitiger Gewindezapfen vorgesehen, der in eine zugeordnete Aufnahmebohrung in einer Gewindebüchse der Spannvorrichtung eingreift.

Es handelt sich also im wesentlichen um die kinematische Umkehrung der Befestigung an der Maschine.

Das letztgenannte Ausführungsbeispiel zeichnet sich auch noch dadurch aus, dass nun nicht eine stirnseitige, radiale Betätigung der Gewindespindel vorgesehen ist, sondern im Gegensatz hierzu eine vorn vorne her gerichtete, in axialer Richtung gehende Betätigungsbewegung auf die nach wie vor in radialer Richtung gelagerte Gewindespindel.

Damit besteht der Vorteil, dass die Betätigung der Gewindespindel von vorne her möglich ist, was bei dem erstbeschriebenen Ausführungsbeispiel nicht gegeben war. Daher ist das letztbeschriebene Ausführungsbeispiel für einen gedrängten Aufbau vorgesehen, bei dem es nicht mehr möglich ist, die Gewindespindel von ihren Stirnseiten her zu betätigen.

Im Übrigen zeigt in der nachfolgenden Zeichnungsbeschreibung dieses Ausführungsbeispiel einen klassischen Spannfall, d. h. den Einsatz der erfindungsgemäßen Spannvorrichtung an einer Maschine.

Dieser im Zeichnungsbeispiel beschriebene Spannfall gilt auch für sämtliche andere Zeichnungsbeispiele, wo die maschinenseitigen Anordnungen der Einfachheit halber nicht dargestellt wurden.

Im Folgenden wird die Erfindung anhand von mehrere Ausführungswege darstellende Zeichnungen näher erläutert. Hierbei gehen aus den Zeichnungen und ihrer Beschreibung weitere Merkmale und Vorteile der Erfindung hervor.

Es zeigen:
- Figur 1:: Teilschnittansicht durch eine Spannschraube in einer ersten Ausführungsform;
- Figur 2:: Schnittansicht der Spannbacken des Spannkopfes der ersten Ausführungsform nach Figur 1;
- Figur 3:: Die Seitenansicht der Gewindespindel der ersten Ausführungsform nach Figur 1;
- Figur 4:: Die teilweise Draufsicht auf das Kopfteil der ersten Ausführungsform nach Figur 1;
- Figur 5:: Die um 90 ° gedrehte Draufsicht auf das Kopfteil nach Figur 4 im Schnitt;
- Figur 6:: Eine zweite Ausführungsform einer Spannschraube im Teilschnitt.
- Figur 7:: Schnitt durch die Spannbacken des Spannkopfes der Spannschraube gemäss der zweiten Ausführungsform nach Figur 6;
- Figur 8:: Draufsicht auf das Kopfteil gemäss der zweiten Ausführungsform nach Figur 6;
- Figur 9:: Die um 90 ° gedrehte Draufsicht auf das Kopfteil nach Figur 8 im Schnitt;
- Figur 10:: Ein dritte Ausführungsform eines Spannelementes im Schnitt mit zusätzlich gezeichneter Spannscheibe;
- Figur 11:: Die um 90° gedrehte Seitenansicht der Spannbacken der Spreizvorrichtung der dritten Ausführungsform gemäss Figur 10, in Pfeilrichtung XI der Figur 12 gesehen;
- Figur 12:: Schnitt durch die Spannbacken der Spreizvorrichtung der dritten Ausführungsform gemäss Figur 10;
- Figur 13:: Draufsicht auf die Zugstange der Spreizvorrichtung der dritten Ausführungsform gemäss Figur 10;
- Figur 14:: Die um 90° gedrehte Draufsicht der Zugstange nach Figur 13 im Teilschnitt;
- Figur 15:: Die Ansicht auf das Kopfteil nach Figur 14 in Pfeilrichtung XV.
- Figur 16:: Schnitt durch eine weitere Ausführungsform, die im wesentlichen der Ausführungsform nach den Figuren 1 bis 5 entspricht.
- Figur 17:: Die Stirnansicht der Ausführungsform nach Figur 16.

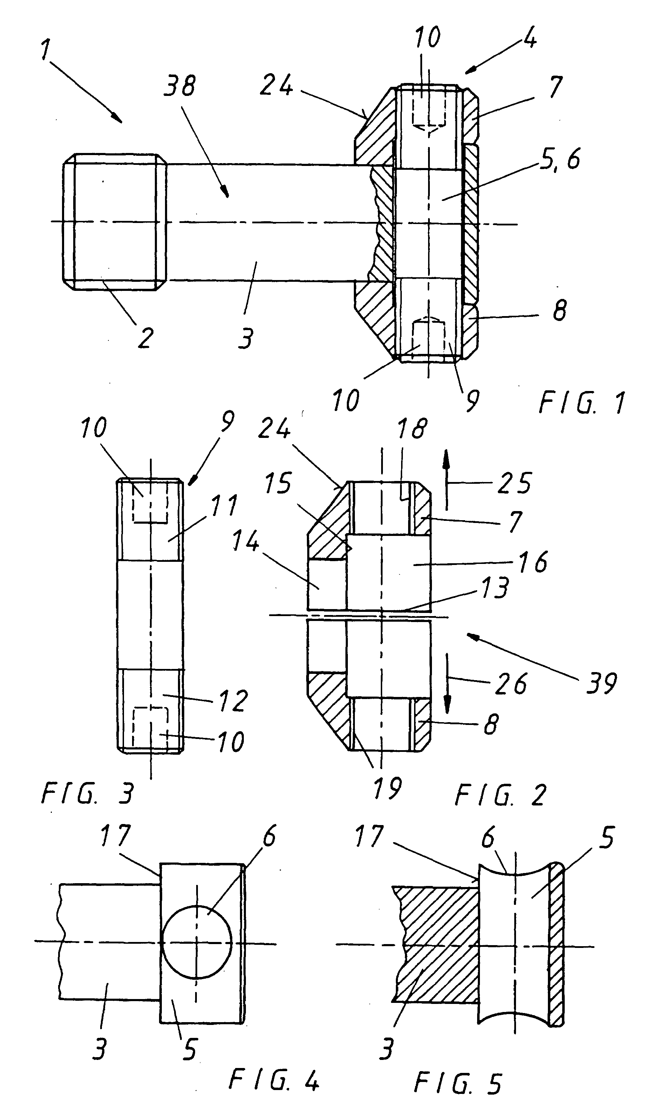

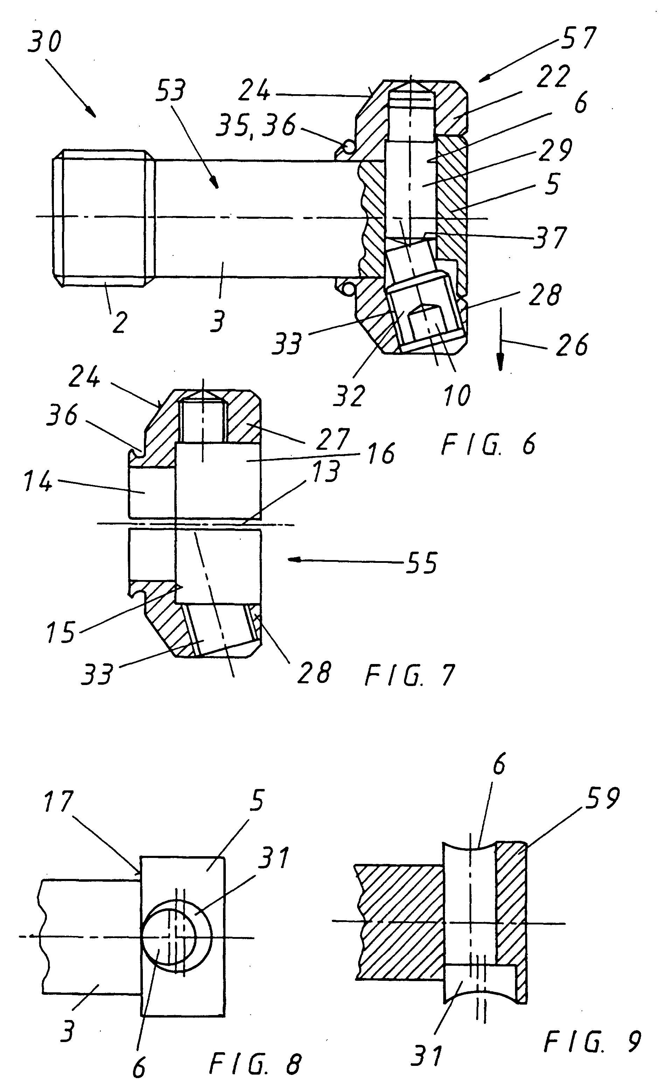

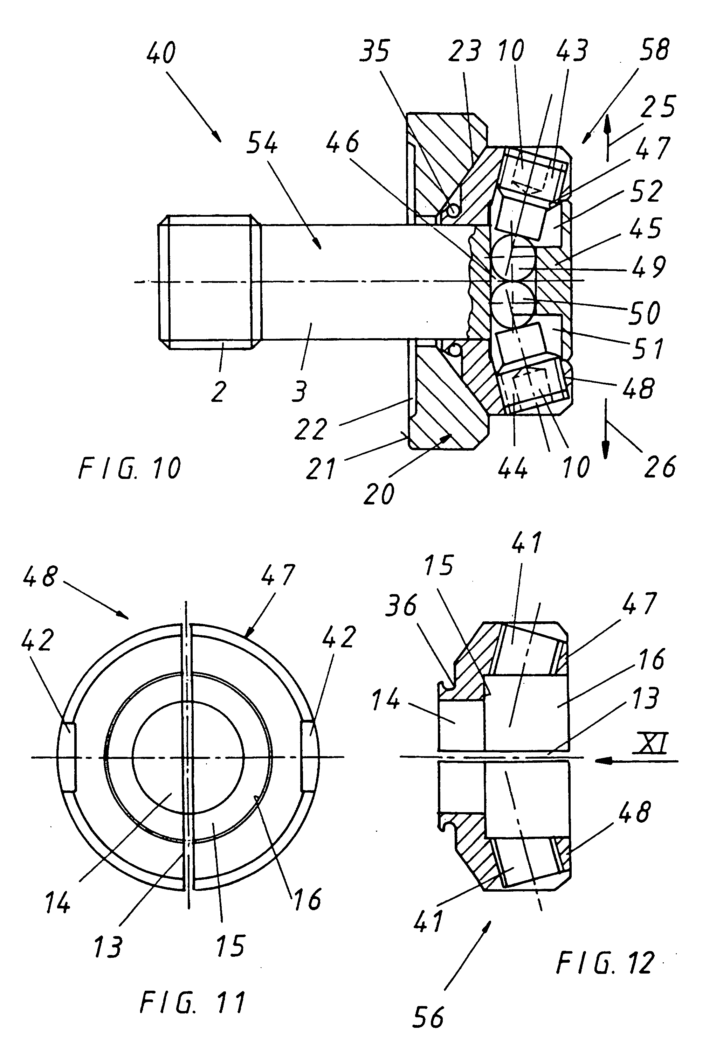

Allgemein wird zu den drei Ausführungsbeispielen angemerkt, dass das erste Ausführungsbeispiel nach Figur 1 - 5 und das zweite Ausführungsbeispiel nach den Figuren 6 - 9 jeweils aus Vereinfachungsgründen ohne die im dritten Ausführungsbeispiel nach den Figuren 10 - 12 dargestellte Spannscheibe 20 gezeichnet sind.

Es ist also jeweils in den Figuren 1 - 6 noch erforderlich, die in Figur 10 dargestellte Spannscheibe 20 gedanklich hinzuzunehmen, um eine vollständig funktionsfähige Spannvorrichtung zu erhalten. Im übrigen wird wegen der allgemeinen Funktion der Spannvorrichtung und deren Anwendung auf den Offenbarungsgehalt der DE 295 18 660 hingewiesen, deren Offenbarung vollständig von der vorliegenden Beschreibung erfasst sein soll.

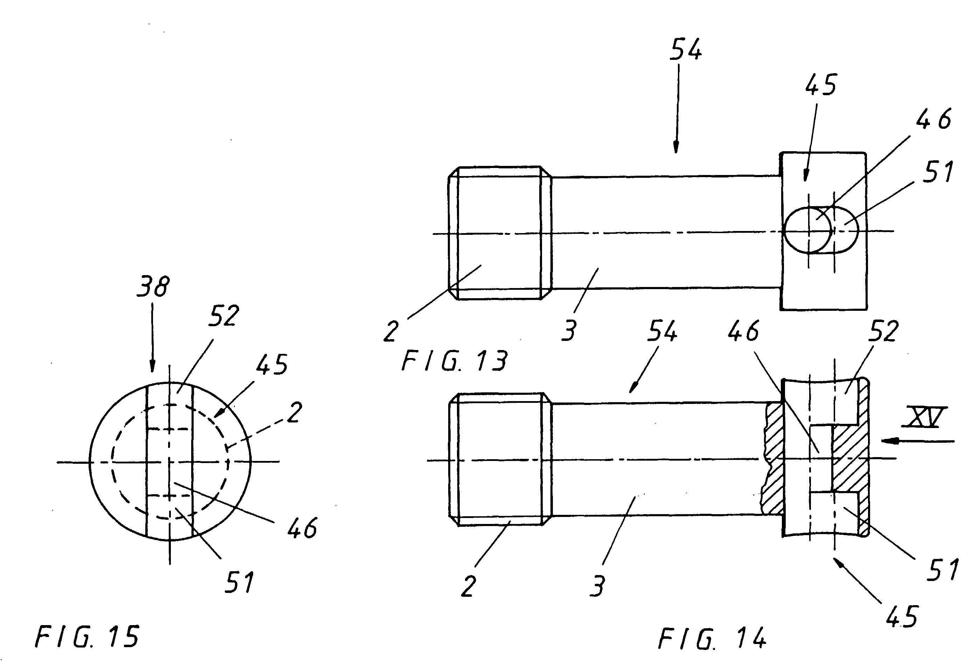

In Figur 1 - 5 besteht im Wesentlichen die Spannschraube 1 aus einem Spannring 39 mit zwei Spannbacken 7, 8, und einer Zugstange 38 mit Gewindeteil 2, Schraubenschaft 3 und Kopfteil 5 vergrößerten Durchmessers (siehe Figuren 13 und 14). Die zwei hälftigen Spannbacken 7, 8 des Spannrings 39 sind im Spannkopf 4 der Spannschraube 1 über eine Gewindespindel 9, welche in eine Durchgangsbohrung 6 in dem Kopfteil 5 eingreift, mit der Zugstange 38 verbunden und bilden die Spreizvorrichtung für die Spannschraube 1.

Das Kopfteil 5 der Zugstange 38 greift hierbei im Bereich einer Aufnahmeöffnung 16 des Spannbacken-Paares 7, 8 gemäss Figur 2 ein, wobei der Schraubenschaft 3 die Durchgangsbohrung 14 durchgreift.

Die umlaufende Schulter 17 der Spannschraube 2 legt sich hierbei an dem Absatz 15 im Bodenbereich der Aufnahmeöffnung 16 des Spannbacken-Paares 7, 8 an.

Die zwei halbschalenförmigen Spannbacken 7, 8 sind möglichst genau symmetrisch zur Längsmittenachse der gesamten Spannschraube 1 ausgebildet und durch einen Spreizschlitz 13 voneinander getrennt.

In jeder Spannbacke 7, 8 ist jeweils eine Gewindebohrung 18, 19 angeordnet, wobei die eine Gewindebohrung 18 z. B. ein Linksgewinde und die andere Gewindebohrung 19 z. B. ein Rechtsgewinde aufweist.

Die beiden Gewindebohrungen 18, 19 sind möglichst genau fluchtend zueinander angeordnet und überbrücken die mittlere Aufnahmeöffnung 16.

In diese beiden Gewindebohrungen 18, 19 ist nun die in Figur 3 dargestellte Gewindespindel 9 eingeschraubt, die im Wesentlichen aus einem zylindrischen Teil besteht, welches an seiner oberen und an seiner unteren Seite jeweils einen Gewindebereich 11, 12 aufweist, wobei wiederum der obere Gewindebereich 11 beispielsweise als Linksgewinde und der untere Gewindebereich 12 beispielsweise als Rechtsgewinde ausgebildet ist.

Wird nun die gesamte Spannschraube 1 zusammengebaut, so ergibt sich die Darstellung nach Figur 1, wo erkennbar ist, dass die Gewindespindel 9 die Durchgangsbohrung 6 im Kopfteil 5 der Zugstange 38 durchgreift, und jeweils mit ihren Gewindebereichen 11, 12 in die dazu gehörenden Gewindebohrungen 18, 19 der Spannbacken 7, 8 des Spannringes 39 eingreift.

Wird nun mit einem geeigneten Werkzeug der Innensechskant 10 in der Gewindespindel 9 betätigt, dann kommt es zu einer Spreizwirkung, weil die Spannbacken 7, 8 in den gegeneinander gerichteten Pfeilrichtungen 25, 26 auseinandergedrückt oder zusammengeführt werden.

Die Spannkraft wird nun dadurch übertragen, dass die Spannbacken 7, 8 an ihrem Aussenumfang eine schräge Konusfläche 24 aufweisen, welche sich an der zugeordneten Konusfläche 23 der in Figur 10 dargestellten Spannscheibe 20 abstützt.

Die Spannscheibe 20 selbst weist eine äußere, umlaufende ringförmige Spannfläche 21 auf, mit der sich diese an einem scheibenförmigen Werkzeugkörper anlegt und diesen gegen eine nicht näher dargestellte Anlagefläche spannt.

Die in Figur 10 noch dargestellte Freistellung 22 dient nur zur Definierung der äusseren, umlaufenden ringförmigen Spannfläche 21.

Im Ausführungsbeispiel nach den Figuren 1 - 5 war ein vollsymmetrischer Antrieb der Spreizvorrichtung dargestellt, wobei eine mittlere, zentrale Gewindespindel 9 gleichmäßig und symmetrisch die beiden gegeneinander gerichteten Spannbacken, 7, 8 betätigt.

Im Ausführungsbeispiel nach den Figuren 6 - 9 ist hingegen ein asymmetrischer Antrieb der Spreizvorrichtung dargestellt.

Für die gleichen Teile wurden hierbei die gleichen Bezugszeichen wie im Vergleich zum vorgenannten Ausführungsbeispiel verwendet.
Bei der Spannschraube 30 besteht wiederum die Zugstange 53 aus den Teilen 2, 3 und 59 und die Spreizvorrichtung weist hierbei im Spannkopf 57 der Spannschraube 30 ebenfalls einen Spannring 55 auf mit gegeneinander gerichteten, halbschalenförmig ausgebildeten Spannbacken 27, 28.

In der einen Spannbacke 27 ist eine querverlaufende Sacklochbohrung 34 mit Gewinde angeordnet, während in der gegenüberliegenden Spannbacke 28 eine schräge Durchgangsbohrung 33 mit Gewinde vorgesehen ist.

Im Innenraum ist hierbei ein Abstützbolzen 29 (siehe Figur 6) angeordnet, der mit seinem einen Ende einen entsprechenden Gewindebereich in die Sacklochbohrung 34 eingeschraubt ist, und der sich mit seinem weiteren Ende 37 in die Durchgangsbohrung 6 der Zugstange 53 hineinerstreckt, wobei sich an diesem Ende 37 das bolzenseitige Ende eines Gewindestiftes 32 abstützt, der in die Gewindebohrung 33 eingeschraubt ist.

Mit der Betätigung des Gewindestiftes 32, der im übrigen an einer Tasche 31 in der Spannbacke 28 schräg gelagert ist, wird demzufolge Druck auf den Abstützbolzen 29 ausgeübt, so dass beim Bestätigen des Gewindestiftes 32 zunächst die untere Spannbacke 28 in Pfeilrichtung 26 sich bewegt, bis diese sich mit ihrer Konusfläche 24 an der dazugehörenden Konusfläche 23 der Spannscheibe 20 anliegt. Der Druck wird dann über das bolzenseitige Ende des Gewindestiftes 32 auf das freie Ende 37 des Abstützbolzens 29 übertragen, der seinerseits die obere Spannbacke 27 bewegt.

Auf diese Weise zentriert sich die gesamte Spreizvorrichtung selbsttätig an der Spannscheibe 20.

Damit die beiden halbschalenförmigen Spannbacken 27 und 28 nicht auseinander fallen, weisen diese jeweils eine Ringnut 36 auf, in welchen ein gemeinsamer Federring 35 eingesetzt ist.

Im dritten Ausführungsbeispiel nach den Figuren 10 - 15 ist wiederum eine symmetrische Betätigung der Spreizvorrichtung dargestellt. Hierbei gelten für die gleichen Teile die gleichen vorher beschriebenen Bezeichnungen und Funktionen.

Die dort gezeigte Spannschraube 40 besteht wiederum aus einer Zugstange 54, bestehend aus den Teilen 2, 3 und 45. Das Kopfteil 45 weist zwei einander gegenüberliegende Ausnehmungen 51, 52 auf, in welche jeweils ein Gewindestift 43, 44 eingreift.

Jeder Gewindestift 43, 44 ist in eine zugeordnete Gewindebohrung 41 in der dazugehörenden jeweiligen Spannbacke 47, 48 des Spannringes 56 eingeschraubt.

Das fußseitige Ende jedes Gewindestiftes 43, 44 stützt sich hierbei an jeweils einer Kugel 49, 50 ab, wobei die beiden Kugeln lediglich der Kraftübertragung dienen und als pendelnde Ausgleichselemente bestimmt sind. Diese Kugeln 49, 50 sind in der Querbohrung 46 im Kopfteil 45 verschiebbar angeordnet. Die Kugeln 49, 50 können gemeinsam ersetzt sein durch einen schrägen Zylinderstift, dessen Stirnflächen als Halbkugelflächen ausgebildet sind.

In Figur 11 ist noch dargestellt, dass bei Draufsicht auf die Spreizvorrichtung (bestehend aus den Spannbacken 47, 48) Fräsflächen 42 erkennbar sind, welche den Eingang für die Gewindebohrungen 41 definieren.

Bei der Betätigung beispielsweise des Gewindestiftes 44 durch Eingriff mit einem geeigneten Werkzeug in den Innensechskant 10 wird deshalb der Gewindestift 44 in seiner Bohrung 41 nach innen geschraubt, so dass das fußseitige Ende einen Druck auf die Kugel 50 ausübt, welcher Druck auf die Kugel 49 übertragen wird und von dort aus auf den Gewindestift 43. Nachdem dieser fest in der Bohrung 41 sitzt, wird damit die Spannbacke 27 in Pfeilrichtung 25 radial nach aussen bewegt. Ebenso bewegt sich demzufolge aufgrund der Abstützung die Spannbacke 48 radial in Pfeilrichtung 26 nach aussen.

Bei dieser Ausführungsform ist es gleichgültig, welcher der beiden Gewindestifte 43, 44 betätigt wird. Es können auch beide Gewindestifte zusammen betätigt werden oder nur einer allein.

Bei diesem Ausführungsbeispiel ist wiederum vorgesehen, dass die beiden Spannbacken 47, 48 eine umlaufende Ringnut 36 aufweisen, in der ein Federring 35 angeordnet ist, um ein Auseinanderfallen der Teile zu vermeiden.

In den Figuren 13 und 14 ist erkennbar, dass im Kopfteil 45 die Querbohrung 46 angeordnet ist, welche jeweils in die Ausnehmungen 51, 52 mündet.

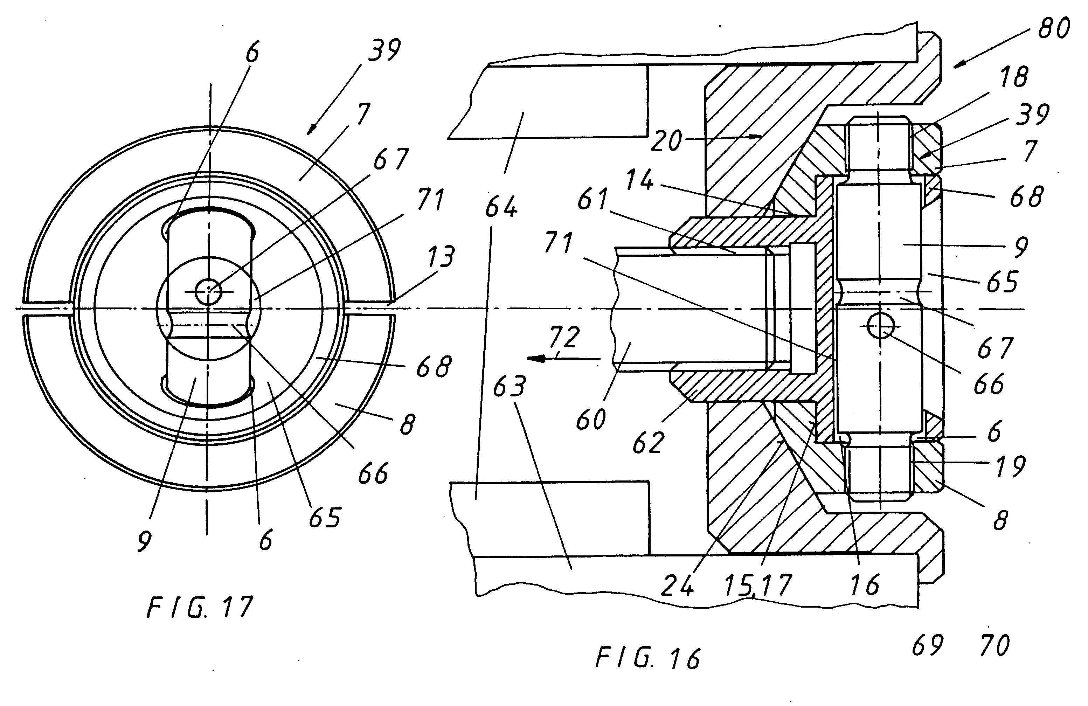

In Figur 16 und 17 ist ein Spannfall der erfindungsgemäßen Spanneinrichtung an einem maschinenseitigen Teil dargestellt.

Wie bereits schon im allgemeinen Beschreibungsteil angeführt, ist dieser Spannfall für sämtliche vorher beschriebenen Ausführungsbeispiele gegeben, nur dass aus Vereinfachungsgründen die maschinenseitigen Teile nicht dargestellt wurden. Dies ist nun in Figur 16 nachgeholt und als weiterer Unterschied zu den vorher beschriebenen Ausführungsbeispielen ist dargestellt, dass die Spannschraube nun erfindungsgemäß als Spannmutter 80 ausgebildet ist.

Hierbei greift ein maschinenseitig angeordneter Maschinenzapfen 60 in ein Innengewinde 61 einer zugeordneten Gewindebüchse 62 ein.

Diese Gewindebüchse 62 bildet eine Aufnahme 62, in der drehbar in radialer Richtung die Gewindespindel 9 gelagert ist.

Nach vorne hin wird diese Aufnahmeöffnung 16 durch Schultern 68 vergrößerten Durchmessers begrenzt, die zwischen sich eine Öffnung 65 definieren, durch welche hindurch eine Betätigung der Gewindespindel 9 möglich ist.

Die Schultern 68 laufen schräg auf einen Boden 61 zu, der Teil der Gewindebüchse 62 ist.

Wie in den vorher beschriebenen Ausführungsbeispielen ist die Gewindespindel 9 mit ihren zugeordneten Rechts- und Linksgewinden 18, 19 in den zugeordneten, gegeneinander bewegbaren und zueinander bewegbar ausgebildeten Spannbacken 7, 8 ausgerichtet.

Mit der Betätigung der Gewindespindel 9 werden also die Spannbacken 7, 8 radial auswärts bewegt, wobei sich der Spreizschlitz 13 entsprechend öffnet.

Hierdurch legt sich der gesamte Spannring 39 mit zugeordneten Konusflächen 24 an entsprechend gleich ausgerichteten Konusflächen der Spannscheibe 20 an.

Die Bestätigung der Gewindespindel 9 erfolgt hierbei von der Stirnseite der Anordnung her durch die Öffnung 65, wobei mit einem Werkzeug die um 90° zueinander versetzt angeordneten Betätigungslöcher 66, 67 betätigt werden, so dass die Gewindespindel im Uhrzeigersinn oder im Uhrzeigergegensinn verdreht werden kann.

Durch die radiale Spreizung der Spannbacken 7, 8 erfolgt also eine entsprechende Kraftübertragung auf die Konusfläche 24 auf die Spannscheibe 20, die somit in axialer Richtung gespannt wird.

Die radiale Verstellung der Spannbacken 7, 8 wird also über die Schräge 24 in eine axiale Verstellbewegung der Spannscheibe 20 übertragen und umgesetzt.

Die Spannscheibe 20 ist hierbei in der der Zentrierung dienenden radialen Anlagefläche 69 in einer Maschinenbüchse 63 gelagert, wobei nun die axialen Anlageflächen 70 in Pfeilrichtung 72 eine Kraft durch den vorderen Bund der Spannscheibe 20 erfahren. Hierbei sitzt die Maschinenbüchse 63 auf einem Zentrierbund 64 der Maschine und wird hierdurch in Pfeilrichtung 72 gespannt.

Dieser Spannfall, d. h. die Umsetzung der radialen Verstellkraft der Spannbacken 7, 8 auf eine maschinenseitig angeordnete Maschinenbüchse 63, wiederum auf einem maschinenseitigen Zentrierbund 64 sitzt, gilt auch für alle vorher beschriebenen Anwendungsbeispiele der Figuren 1 bis 15.

Lediglich der Einfachheit halber wurde im letzten Ausführungsbeispiel dieser Einspannfall geschildert, der für alle anderen Anwendungsbeispiele ebenso gilt.

### Zeichnungslegende

- 1: Spannschraube
- 2: Gewindeteil
- 3: Schraubenschaft
- 4: Spannkopf
- 5: Kopfteil
- 6: Durchgangsbohrung
- 7: Spannbacke
- 8: Spannbacke
- 9: Gewindespindel
- 10: Innensechskant
- 11: Gewindebereich (links)
- 12: Gewindebereich (rechts)
- 13: Spreizschlitz
- 14: Durchgangsbohrung
- 15: Absatz
- 16: Aufnahmeöffnung
- 17: Schulter
- 18: Gewindebohrung (links)
- 19: Gewindebohrung (rechts)
- 20: Spannscheibe
- 21: Spannfläche
- 22: Freistellung
- 23: Konusfläche (Spannscheibe)
- 24: Konusfläche (Spannbacke)
- 25: Pfeilrichtung
- 26: Pfeilrichtung
- 27: Spannbacke
- 28: Spannbacke
- 29: Abstützbolzen
- 30: Spannelement
- 31: Tasche
- 32: Gewindestift
- 33: Gewindebohrung
- 34: Sacklochbohrung (Gewinde)
- 35: Federring
- 36: Ringnut
- 37: Ende
- 38: Zugstange
- 39: Spannring
- 40: Spannelement
- 41: Gewindebohrung
- 42: Fräsfläche
- 43: Gewindestift
- 44: Gewindestift
- 45: Kopfteil
- 46: Querbohrung
- 47: Spannbacke
- 48: Spannbacke
- 49: Kugel
- 50: Kugel
- 51: Ausnehmung
- 52: Ausnehmung
- 53: Zugstange
- 54: Zugstange
- 55: Spannring
- 56: Spannring
- 57: Spannkopf
- 58: Spannkopf
- 59: Kopfteil
- 60: Maschinen-Zapfen
- 61: Innengewinde
- 62: Gewindebüchse
- 63: Maschinenbüchse
- 64: Zentrierbund (Maschine)
- 65: Öffnung
- 66: Betätigungsloch
- 67: Betätigungsloch
- 68: Schultern (Gewindebüchse 62)
- 69: Anlagefläche
- 70: Anlagefläche
- 71: Boden
- 72: Pfeilrichtung

- 80: Spannmutter

## Patentansprüche

1. Spannvorrichtung beinhaltend mindestens eine Spannscheibe (20), über welche Bauteile fest miteinander verspannt werden können, und beinhaltend mindestens eine mit der Spannscheibe (20) zusammenwirkende Spannschraube (1;30;40;80) mit Spreizvorrichtung (7-9; 27-29, 32; 43,44,47-50), wobei die Spannschraube (1;30;40;80) eine Zugstange (38;53;54;62) beinhaltet, welche im wesentlichen aus einem Schraubenschaft (3) besteht, welcher an seinen Enden jeweils einen Gewindeteil (2) und einen Kopfteil (5;45;59;68) trägt, wobei die Spreizvorrichtung (7-9; 27-29, 32; 43,44,47-50) der Spannschraube (1;30;40;80) lediglich im Spannkopf (4;57;58) der Spannschraube (1;30;40,80) angeordnet ist und das Kopfteil (5;45;59;68) der Zugstange (38;53;54;62) mit einem Spannring (39; 55; 56) der Spreizvorrichtung (7-9; 27-29, 32; 43,44,47-50) verbunden ist, welcher Spannring (39; 55; 56) aus zwei Spannbacken-Hälften (7,8; 27,28; 47,48) besteht, die mindestens je eine Konusfläche (24) zur Anlage an einer Konusfläche (23) der Spannscheibe (20) beinhalten, **dadurch gekennzeichnet, dass** der Schraubenschaft (3) der Zugstange (38;53;54; 62) eine Durchgangsbohrung (14) der zwei Spannbacken-Hälften (7,8; 27,28; 47,48) durchgreift.

2. Spannvorrichtung nach Anspruch 1, **dadurch gekennzeichnet, dass** das Gewindeteil (2) der Zugstange (38;53;54) mit einem ersten Bauteil befestigbar ist.

3. Spannvorrichtung nach Anspruch 1 oder 2, **dadurch gekennzeichnet, dass** der Spannring (39; 55; 56) aus zwei Spannbacken-Hälften (7,8; 27,28; 47,48) aus je einer etwa 180°-Scheibe besteht, welche zwischen sich einen Spreizschlitz (13) definieren.

4. Spannvorrichtung nach einem der Ansprüche 1 bis 3, **dadurch gekennzeichnet, dass** die zwei Spannbacken-Hälften (7,8; 27,28; 47,48) über eine Gewindespindel (9) oder über mindestens einen Federring (35) mit der Zugstange (38;53;54) verbunden sind.

5. Spannvorrichtung nach einem der Ansprüche 1 bis 4, **dadurch gekennzeichnet, dass** der Antrieb der Spannbacken-Hälften (7,8; 27,28; 47,48) mittels der Gewindespindel (9) erfolgt oder mittels eines Gewindestiftes (32) mit Abstützbolzen (29) oder mittels zweier Gewindestifte (43,44) und zugehöriger Kugeln (49,50).

6. Spannvorrichtung nach einem der Ansprüche 1 bis 5, **dadurch gekennzeichnet, dass** die zwei Spannbacken-Hälften (7,8; 47,48) spiegelsymmetrisch zueinander sind und somit zwei etwa identische Teile darstellen.

7. Spannvorrichtung nach Anspruch 6, **dadurch gekennzeichnet, dass** die Gewindespindel (9) eine Bohrung (6) in der Zugstange (38) durchgreift und an ihrem jeweiligen Ende ein Links- bzw. ein Rechtsgewinde besitzt, womit sie in entsprechende Gewindebohrungen (18,19) in den Spannbacken-Hälften (7,8) bewegbar eingeschraubt ist.

8. Spannvorrichtung nach einem der Ansprüche 5 bis 7, **dadurch gekennzeichnet, dass** die Gewindebohrungen (33, 34; 41, 41) für die Gewindestifte/Abstützbolzen (29, 32; 43, 44) der zwei Spannbacken-Hälften (27, 28, 47, 48) schräg zur Längsachse der Spannschraube (30; 40) liegen.

9. Spannvorrichtung nach einem der Ansprüche 5 bis 8, **dadurch gekennzeichnet, dass** die radial inneren Enden (37) der Gewindestifte (32; 43, 44) der zwei Spannbacken-Hälften (28; 47,48) im Bereich von Taschen/Ausnehmungen (31; 51,52) liegen.

10. Spannvorrichtung nach einem der Ansprüche 1 bis 9, **dadurch gekennzeichnet, dass** die Spannschraube als Spannmutter (80) ausgebildet ist, bei der in einer Durchgangsbohrung (14) der Spannscheibe (20) eine Gewindebüchse (62) angeordnet ist, die in Eingriff mit einem Maschinen-Zapfen (60) ist, und die ferner am Außenumfang den Spannring (39) mit den beiden radial spreizbaren Spannbacken (7, 8) trägt.

11. Spannvorrichtung nach Anspruch 10, **dadurch gekennzeichnet, dass** die Betätigung der Gewindespindel (9) stirnseitig von vorne durch eine Öffnung (65) in der Gewindebüchse (62) erfolgt.

12. Spannvorrichtung nach Anspruch 11, **dadurch gekennzeichnet, dass** die Betätigung der Gewindespindel (9) über radiale, zueinander versetzte Betätigungslöcher (66, 67) oder über einen an der Gewindespindel (9) ausgebildeten Sechskant erfolgt.

## Claims

1. Clamping device comprising at least one tension washer (20) via which components can be rigidly braced with one another, and comprising at least one clamping screw (1; 30; 40; 80) co-operating with the tension washer (20) with a spreading device (7-9; 27-29, 32; 43, 44, 47-50), the clamping screw (1; 30; 40; 80) comprising a tension rod (38; 53; 54; 62), substantially consisting of a screw shank (3), which carries at its ends a threaded part (2) and a head part (5; 45; 59; 68), respectively, wherein the spreading device (7-9; 27-29, 32; 43, 44, 47-50) of the clamping screw (1; 30; 40; 80) is arranged only in the clamping head (4; 57; 58) of the clamping screw (1; 30; 40, 80) and the head part (5; 45; 59; 68) of the tension rod (38; 53; 54; 62) is connected to a clamping ring (39; 55; 56) of the spreading device (7-9; 27-29, 32; 43, 44, 47-50), which clamping ring (39; 55; 56) consists of two clamping jaw halves (7, 8; 27, 28; 47, 48) which comprise at least one respective cone face (24) to abut a cone face (23) of the tension washer (20), **characterised in that** the screw shank (3) of the tension rod (38; 53; 54; 62) penetrates a through-hole (14) of the two clamping jaw halves (7, 8; 27, 28; 47, 48).

2. Clamping device according to claim 1, **characterised in that** the threaded part (2) of the tension rod (38; 53; 54) can be fastened to a first component.

3. Clamping device according to claim 1 or 2, **characterised in that** the clamping ring (39; 55; 56) consists of two clamping jaw halves (7, 8; 27, 28; 47, 48) each made of one approximately 180° disc, which between them define a spreading slot (13).

4. Clamping device according to any one of claims 1 to 3, **characterised in that** the two clamping jaw halves (7, 8; 27, 28; 47, 48) are connected via a threaded spindle (9) or via at least one spring washer (35) to the tension rod (38; 53; 54).

5. Clamping device according to any one of claims 1 to 4, **characterised in that** the clamping jaw halves (7, 8; 27, 28; 47, 48) are driven by means of the threaded spindle (9) or by means of a threaded pin (32) with support bolts (29) or by means of two threaded pins (43, 44) and associated balls (49, 50).

6. Clamping device according to any one of claims 1 to 5, **characterised in that** the two clamping jaw halves (7, 8; 47, 48) are mirror-symmetrical with respect to one another and are therefore two identical parts.

7. Clamping device according to claim 6, **characterised in that** the threaded spindle (9) penetrates a hole (6) in the tension rod (38) and has a left-hand or right-hand thread at its respective end, with which it is moveably screwed into corresponding threaded holes (18, 19) in the clamping jaw halves (7, 8).

8. Clamping device according to any one of claims 5 to 7, **characterised in that** the threaded holes (33, 34; 41, 41) for the threaded pins/support bolts (29, 32; 43, 44) of the two clamping jaw halves (27, 28, 47, 48) are located obliquely to the longitudinal axis of the clamping screw (30; 40).

9. Clamping device according to any one of claims 5 to 8, **characterised in that** the radially inner ends (37) of the threaded pins (32; 43, 44) of the two clamping jaw halves (28; 47, 48) are located in the region of pockets/recesses (31; 51, 52).

10. Clamping device according to any one of claims 1 to 9, **characterised in that** the clamping screw is designed as a tension nut (80), in which a threaded bush (62) is arranged in a through-hole (14) of the tension washer (20), which bush engages with a machine journal (60), and which also carries, on the outer periphery, the clamping ring (39) with the two radially spreadable clamping jaws (7, 8).

11. Clamping device according to claim 10, **characterised in that** the threaded spindle (9) is actuated on the end face from the front via an aperture (65) in the threaded bush (62).

12. Clamping device according to claim 11, **characterised in that** the threaded spindle (9) is actuated via actuating holes (66, 67), which are radially offset with respect to one another, or via a hexagon formed on the threaded spindle (9).

## Revendications

1. Dispositif de serrage comprenant au moins une rondelle de serrage (20) grâce à laquelle des éléments de construction peuvent être assemblés par serrage, et au moins une vis de serrage (1 ; 30 ; 40 ; 80) qui coopère avec ladite rondelle (20) et qui comporte un dispositif écarteur (7-9 ; 27-29, 32 ; 43, 44, 47-50), la vis de serrage (1 ; 30 ; 40 ; 80) comportant une tige de traction (38 ; 53 ; 54 ; 62) qui se compose essentiellement d'une tige de vis (3) portant à ses extrémités une partie filetée (2) et une partie de tête (5 ; 45 ; 59 ; 68), et le dispositif écarteur (7-9 ; 27-29, 32 ; 43, 44, 47-50) de la vis de serrage (1 ; 30 ; 40 ; 80) n'étant disposé que dans la tête de serrage (4 ; 57 ; 58) de la vis de serrage (1 ; 30 ; 40, 80) tandis que la partie de tête (5 ; 45 ; 59 ; 68) de la tige de traction (38 ; 53 ; 54 ; 62) est reliée à une bague de serrage (39 ; 55 ; 56) du dispositif écarteur (7-9 ; 27-29, 32 ; 43, 44, 47-50), laquelle bague de serrage (39 ; 55 ; 56) se compose de deux moitiés formant mâchoires de serrage (7, 8 ; 27, 28 ; 47, 48) qui présentent chacune une surface conique (24) destinée à s'appliquer contre une surface conique (23) de la rondelle de serrage (20), **caractérisé en ce que** la tige filetée (3) de la tige de traction (38 ; 53 ; 54 ; 62) traverse un perçage traversant (14) des deux moitiés formant mâchoires de serrage (7, 8 ; 27, 28 ; 47, 48).

2. Dispositif de serrage selon la revendication 1, **caractérisé en ce que** la partie filetée (2) de la tige de traction (38 ; 53 ; 54) est apte à être fixée à un premier élément de construction.

3. Dispositif de serrage selon la revendication 1 ou 2, **caractérisé en ce que** la bague de serrage (39 ; 55 ; 56) se compose de deux moitiés formant mâchoires de serrage (7, 8 ; 27, 28 ; 47, 48) qui sont formées chacune par une rondelle d'environ 180° et qui définissent entre elles une fente d'écartement (13).

4. Dispositif de serrage selon l'une des revendications 1 à 3, **caractérisé en ce que** les deux moitiés formant mâchoires de serrage (7, 8 ; 27, 28 ; 47, 48) sont reliées à la tige de serrage (38 ; 53 ; 54) par l'intermédiaire d'une broche filetée (9) ou d'au moins une rondelle élastique (35).

5. Dispositif de serrage selon l'une des revendications 1 à 4, **caractérisé en ce que** l'entraînement des moitiés formant mâchoires de serrage (7, 8 ; 27, 28 ; 47, 48) se fait à l'aide de la broche filetée (9), ou à l'aide d'une tige filetée (32) avec des boulons d'appui (29), ou à l'aide de deux tiges filetées (43, 44) et de billes associées (49, 50).

6. Dispositif de serrage selon l'une des revendications 1 à 5, **caractérisé en ce que** les deux moitiés formant mâchoires de serrage (7, 8 ; 47, 48) sont disposées en miroir et constituent ainsi deux éléments à peu près identiques.

7. Dispositif de serrage selon la revendication 6, **caractérisé en ce que** la tige filetée (9) traverse un perçage (6) de la tige de traction (38) et présente à ses extrémités un filetage à gauche et un filetage à droite, moyennant quoi elle peut être vissée, mobile, dans des perçages filetés correspondants (18, 19) des moitiés formant mâchoires de serrage (7, 8).

8. Dispositif de serrage selon l'une des revendications 5 à 7, **caractérisé en ce que** les perçages filetés (33, 34 ; 41, 41) pour les tiges filetées/boulons d'appui (29, 32 ; 43, 44) des deux moitiés formant mâchoires de serrage (27, 28, 47, 48) sont inclinés par rapport à l'axe longitudinal de la vis de serrage (30 ; 40).

9. Dispositif de serrage selon l'une des revendications 5 à 8, **caractérisé en ce que** les extrémités radialement intérieures (37) des tiges filetées (32 ; 43, 44) des deux moitiés formant mâchoires de serrage (28 ; 47, 48) sont situées dans la zone de poches/cavités (31 ; 51, 52).

10. Dispositif de serrage selon l'une des revendications 1 à 9, **caractérisé en ce que** la vis de serrage est conçue comme un écrou de serrage (80) pour lequel il est prévu, dans un perçage traversant (14) de la rondelle de serrage (20), une douille filetée (62) qui est en prise avec un tourillon de machine (60) et qui porte en outre, sur sa circonférence extérieure, la bague de serrage (39) avec les deux mâchoires de serrage (7, 8) aptes à s'écarter radialement.

11. Dispositif de serrage selon la revendication 10, **caractérisé en ce que** l'actionnement de la broche filetée (9) se fait côté frontal, par l'avant, à travers une ouverture (65) prévue dans la douille filetée (62).

12. Dispositif de serrage selon la revendication 11, **caractérisé en ce que** l'actionnement de la broche filetée (9) se fait par l'intermédiaire de trous d'actionnement radiaux décalés (66, 67) ou d'un six-pans formé sur la broche filetée (9).
